# EUROPEAN PATENT APPLICATION

(11) **EP 4 815 044 A1**
(43) Date of publication of application: **30.09.2026**
(21) Application number: 24894131.2
(22) Date of filing: 19.11.2024
(51) Int. Cl.: H01M 4/13, H01B 1/06, H01M 4/38, H01M 4/48, H01M 4/62, H01M 4/134, H01M 4/139, H01M 10/052, H01M 10/0562

(54) **ALL-SOLID-STATE BATTERY NEGATIVE ELECTRODE LAYER AND ALL-SOLID-STATE BATTERY**

(30) Priority: 24.11.2023 JP 2023199025
(71) Applicant: MITSUBISHI GAS CHEMICAL COMPANY, INC., Chiyoda-ku Tokyo 100-8324 (JP); National Institute of Advanced Industrial Science and Technology, Chiyoda-ku Tokyo 100-8921 (JP)
(72) Inventor: SHIMANAKA Akira, Niigata-shi, Niigata 950-3112 (JP); NOGUCHI Keita, Hiratsuka-shi, Kanagawa 254-0016 (JP); SENOH Hiroshi, Tsukuba-shi, Ibaraki 305-8560 (JP); MUKAI Takashi, Tsukuba-shi, Ibaraki 305-8560 (JP); YAMASHITA Naoto, Tsukuba-shi, Ibaraki 305-8560 (JP)
(74) Representative: Vossius & Partner Patentanwälte Rechtsanwälte mbB
(86) International application number: PCT/JP2024/040908
(87) International publication number: WO 2025/110140

(57) **Abstract**

According to one embodiment, there is provided a negative electrode layer for all-solid-state batteries, comprising a negative electrode active material and a solid electrolyte, wherein the negative electrode active material is a silicon-based material, and the solid electrolyte is a boron cluster-type solid electrolyte.

## Description

### Technical Field

The present invention relates to a negative electrode layer used for all-solid-state batteries, and an all-solid-state battery comprising the same. The present invention also relates to a method for producing a negative electrode layer for all-solid-state batteries.

### Background Art

**In** recent years, the demand for lithium-ion secondary batteries has been increasing in intended uses such as mobile information terminals, mobile electronic devices, electric vehicles, hybrid electric vehicles, and further, stationary power storage systems. However, current lithium-ion secondary batteries use flammable organic solvents as electrolytes, and thus, require a strong exterior to prevent the organic solvents from leaking. In addition, restrictions on the structure of devices have been imposed, such that portable personal computers, etc. are required to have structures that are against the risk of electrolyte leakage.

Moreover, the intended uses of lithium-ion secondary batteries have expanded to moving objects such as automobiles and airplanes, and stationary lithium-ion secondary batteries are required to have large volumes. Under such circumstances, there is a tendency to place more importance on safety than ever before, and efforts are being made to develop all-solid-state lithium-ion secondary batteries that do not use harmful substances such as organic solvents.

Among the solid electrolytes used in all-solid-state batteries, since sulfide solid electrolytes and complex hydrides have high ionic conductivity and are relatively soft, these are characterized by easily forming solid-solid interfaces. They are also stable against metallic lithium, and thus, their development as practical solid electrolytes is progressing. These solid electrolytes are sometimes added to the positive electrode layer and/or negative electrode layer. In such a case, depending on the problem to be solved, it is necessary to appropriately select a positive electrode active material and a negative electrode active material and to consider the combination of these active materials with the solid electrolyte. For example, a silicon-based material is considered to be a negative electrode active material that can achieve a high theoretical capacity (Patent Literature 1). However, when a conventionally used solid electrolyte is added to a negative electrode layer containing a silicon-based material, it may cause a problem that the silicon-based material itself may expand and contract due to charge and discharge. As a result, voids are generated within the negative electrode layer, leading to problems such as an increase in the resistance value, and a decrease in the capacity due to repeated charge and discharge cycles. Under such circumstances, it has been desired to appropriately select the materials and configurations of individual layers in an all-solid-state battery to solve various problems.

### Citation List

### Patent Literature

Patent Literature 1: Japanese Patent No. 7269571

### Summary of Invention

### Technical Problem

It is an object of the present invention to provide a negative electrode layer for obtaining all-solid-state batteries that can operate stably, and an all-solid-state battery comprising the negative electrode layer.

### Solution to Problem

The present inventors have conducted intensive studies directed towards solving the aforementioned problems of silicon-based materials, and as a result, the present inventors have found that an all-solid-state battery that can operate stably can be obtained by combining a silicon-based material with a predetermined solid electrolyte to configure a negative electrode layer, although charge and discharge cycles are repeated.

The present invention is, for example, as follows.
[1] A negative electrode layer for all-solid-state batteries, comprising a negative electrode active material and a solid electrolyte, wherein the negative electrode active material is a silicon-based material, and the solid electrolyte is a boron cluster-type solid electrolyte.
   [1-1] The negative electrode layer for all-solid-state batteries according to the above [1], wherein the boron cluster-type solid electrolyte comprises one or more selected from LiCB₉H₁₀, LiCB₁₁H₁₂, and Li₂B₁₂H₁₂.
[2] The negative electrode layer for all-solid-state batteries according to the above [1], wherein the boron cluster-type solid electrolyte is a solid electrolyte composite comprising LiCB₉H₁₀ and LiCB₁₁H₁₂ at a molar ratio of LiCB₉H₁₀/LiCB₁₁H₁₂ = 1.1 to 20.
[3] The negative electrode layer for all-solid-state batteries according to the above [2], wherein the boron cluster-type solid electrolyte is a solid electrolyte composite comprising LiCB₉H₁₀ and LiCB₁₁H₁₂ at a molar ratio of LiCB₉H₁₀ : LiCB₁₁H₁₂ = 7 : 3.
[4] The negative electrode layer according to any one of the above [1] to [3], wherein the silicon-based material is selected from the group consisting of SiO, Si, SiN, SiC, and Si carbon composite.
[5] The negative electrode layer for all-solid-state batteries according to any one of the above [1] to [4], wherein the silicon-based material is comprised at a percentage of 40% to 90% by weight, with respect to the total weight of the boron cluster-type solid electrolyte and the silicon-based material.
   [5-1] The negative electrode layer for all-solid-state batteries according to any one of the above [1] to [5], wherein the negative electrode layer for all-solid-state batteries is a negative electrode sheet, comprising a current collector, and a layer containing a negative electrode active material laminated on the current collector.
[6] A method for producing a negative electrode layer for all-solid-state batteries, comprising:
   preparing a solid electrolyte solution, in which a boron cluster-type solid electrolyte is dissolved in a solvent, and
   impregnating a sheet containing a silicon-based material with the obtained solid electrolyte solution, followed by drying it, to obtain a negative electrode layer for all-solid-state batteries.
[7] The method according to the above [6], wherein the solvent comprises at least one type selected from the group consisting of water, alcoholic solvents, tetrahydrofuran, acetonitrile, toluene, N-methyl pyrrolidone, dimethyl carbonate, and ethyl acetate.
[8] The method according to the above [6] or [7], wherein the boron cluster-type solid electrolyte is a solid electrolyte composite comprising LiCB₉H₁₀ and LiCB₁₁H₁₂ at a molar ratio of LiCB₉H₁₀/LiCB₁₁H₁₂ = 1.1 to 20.
[9] The method according to the above [8], wherein the boron cluster-type solid electrolyte is a solid electrolyte composite comprising LiCB₉H₁₀ and LiCB₁₁H₁₂ at a molar ratio of LiCB₉H₁₀ : LiCB₁₁H₁₂ = 7 : 3.
[10] The method according to any one of the above [6] to [9], wherein the silicon-based material is selected from the group consisting of SiO, Si, SiN, SiC, and Si carbon composite.
[11] The method according to any one of the above [6] to [9], wherein The drying is carried out under atmospheric pressure at a temperature of 40°C to 180°C for 30 minutes to 5 hours, and is further carried out under vacuum at a temperature of 100°C to 300°C for 1 to 25 hours.
[12] An all-solid-state battery, comprising a positive electrode layer, and a negative electrode layer, a solid electrolyte layer disposed between the positive electrode layer and the negative electrode layer, wherein
   the negative electrode layer is the negative electrode layer for all-solid-state batteries according to any one of the above [1] to [5-1].
[13] The all-solid-state battery according to the above [12], wherein the solid electrolyte layer comprises a boron cluster-type solid electrolyte.
[14] The all-solid-state battery according to the above [13], wherein the solid electrolyte layer is a solid electrolyte sheet comprising, a supporting base material, and a boron cluster-type solid electrolyte supported on the supporting base material.

### Advantageous Effects of Invention

According to the present invention, there can be provided a negative electrode layer for obtaining all-solid-state batteries that can operate stably, and an all-solid-state battery comprising the negative electrode layer.

### Brief Description of Drawings

[Figure 1] Figure 1 is a cross-sectional view of the all-solid-state battery according to the embodiment.
[Figure 2] Figure 2 is a view showing the charge-discharge test results of Example 1.
[Figure 3] Figure 3 is a view showing the charge-discharge test results of Comparative Example 1.
[Figure 4] Figure 4 is a view showing the charge-discharge test results of Comparative Example 2.

### Description of Embodiments

Hereinafter, the embodiments of the present invention will be described in detail. It is to be noted that the materials, configurations, etc. described below are not intended to limit the present invention, and that they can be modified in various ways within the scope of the gist of the present invention.

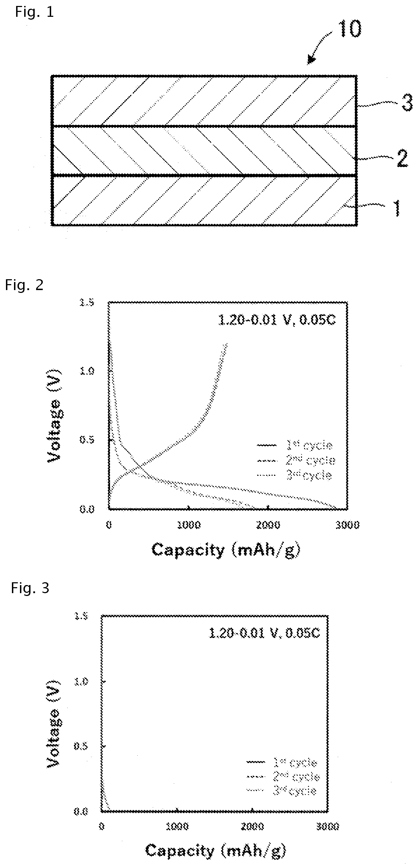

First, a cross-sectional view of the all-solid-state battery according to the embodiment is shown in Figure 1.

An all-solid-state battery 10 according to the embodiment is, for example, an all-solid-state lithium-ion secondary battery, and can be used in various types of apparatuses including, as typical examples, mobile phones, personal computers, and automobiles. The all-solid-state battery 10 has a structure in which a solid electrolyte layer 2 is disposed between a positive electrode layer 1 and a negative electrode layer 3.

### 1. Negative electrode layer

According to one embodiment of the present invention, there is provided a negative electrode layer for all-solid-state batteries, comprising a negative electrode active material and a solid electrolyte, wherein the negative electrode active material is a silicon-based material, and the solid electrolyte is a boron cluster-type solid electrolyte.

An all-solid-state battery, in which a silicon-based material and a boron cluster-type solid electrolyte are used for the negative electrode layer thereof, exhibits little deterioration even after charge and discharge cycles have been repeated multiple times, and a decrease in the charge and discharge capacity due to long-term use can be kept to a minimum, allowing for stable use over a long period of time. In other words, by using the negative electrode layer according to the embodiment, an all-solid-state battery with excellent cycle characteristics can be obtained. It is considered that this is caused by the boron cluster-type solid electrolyte's ability to suppress the expansion and contraction of the silicon-based material that are generated by charge and discharge. While the specific mechanism is unknown, it is assumed that the boron cluster-type solid electrolyte "follows" the expansion and contraction of the silicon-based material. This "following" of the boron cluster-type solid electrolyte is thought to contribute to the favorable charge and discharge cycles.

The all-solid-state battery according to the embodiment is revolutionary in that it can solve the above-described issues regarding cycle characteristics, while using a silicon-based material that contributes to an increase in the theoretical capacity. That is to say, the all-solid-state battery according to the embodiment is advantageous in that it has a large capacity and stably operates over a long period of time.

The boron cluster-type solid electrolyte is one type of complex hydride, and is a compound having a cluster structure comprising boron as a basic skeleton. In general, this cluster structure is preferably closed (cage-like), since it exhibits high stability against water and alcohol when it is closed. Specific examples of the boron cluster-type solid electrolyte may include LiCB₉H₁₀, LiCB₁₁H₁₂, and Li₂B₁₂H₁₂. Among these, a boron cluster-type solid electrolyte having carbon in the skeleton thereof is preferable because its ionic conductivity tends to become high. Examples of such a compound may include LiCB₉H₁₀ and LiCB₁₁H₁₂. These boron cluster-type solid electrolytes may be used alone as a single type or in combination of two or more types. The chemical structures of LiCB₉H₁₀ and LiCB₁₁H₁₂ are shown below.

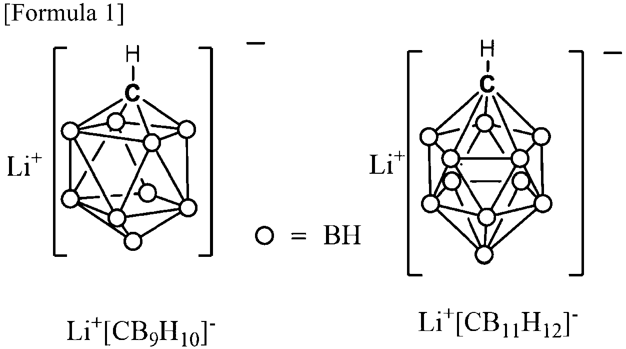

The boron cluster-type solid electrolyte is preferably a solid electrolyte composite of LiCB₉H₁₀ and LiCB₁₁H₁₂, and is more preferably a solid electrolyte composite comprising LiCB₉H₁₀ and LiCB₁₁H₁₂ at a molar ratio of LiCB₉H₁₀/LiCB₁₁H₁₂ = 1.1 to 20 (more preferably 1.25 to 10, and further preferably 1.5 to 9).

The above-described solid electrolyte composite preferably has peaks at 749 cm⁻¹ (±5 cm⁻¹) based on LiCB₉H₁₀ and at 763 cm⁻¹ (±5 cm⁻¹) based on LiCB₁₁H₁₂, respectively, in Raman spectroscopy. The solid electrolyte composite may also have peaks in other regions, but the peaks showing individual characteristics are those as described above.

Further preferably, the boron cluster-type solid electrolyte is a solid electrolyte composite comprising LiCB₉H₁₀ and LiCB₁₁H₁₂ at a molar ratio of LiCB₉H₁₀ : LiCB₁₁H₁₂ = about 7 : 3. By mixing LiCB₉H₁₀ and LiCB₁₁H₁₂ at a molar ratio of LiCB₉H₁₀ : LiCB₁₁H₁₂ = about 7 : 3, a material having higher ionic conductivity (> 1 mS/cm) can be obtained.

As LiCB₉H₁₀ and LiCB₁₁H₁₂ that are raw materials, generally commercially available products can be used. In addition, their purity is preferably 95% or more, and more preferably 98% or more. By using a compound having a purity that is within the above-described range, desired crystals can be easily obtained.

LiCB₉H₁₀ and LiCB₁₁H₁₂ can be mixed in the air and in a homogeneous solvent. The solvent is not particularly limited, and examples of the solvent may include water, nitrile solvents such as acetonitrile as a typical example, ether solvents such as tetrahydrofuran and diethyl ether, N,N-dimethylformamide, N,N-dimethylacetamide, alcoholic solvents such as methanol, ethanol and propanol, acetone, ethyl acetate, methyl acetate, toluene, methylene chloride, and chloroform. Among these solvents, water, and alcoholic solvents such as ethanol and isopropanol, are preferable for safety reasons, with water being more preferable. As alcohol solvents, those containing three or less carbon atoms are more preferable.

For example, LiCB₉H₁₀ and LiCB₁₁H₁₂ are mixed using water as a solvent, and the water is then distilled away from the mixed aqueous solution using an evaporator, so that a composite, in which LiCB₉H₁₀ and LiCB₁₁H₁₂ are mixed at a predetermined molar ratio, can be obtained. Depending on the solvent type, the time for distilling away the solvent by an evaporator and the powder drying time are different, and the drying time tends to be shorter when an alcoholic solvent is used.

In the negative electrode layer, the boron cluster-type solid electrolyte is comprised at a percentage of, preferably 10% to 85% by weight, more preferably 15% to 80% by weight, and particularly preferably 20% to 75% by weight, with respect to the total weight of the boron cluster-type solid electrolyte and the silicon-based material.

The silicon-based material is not limited, as long as it is a material containing silicon. Examples of the silicon-based material may include Si, SiO, and Si-C composite materials. Among these, Si and SiO are preferable, and SiO is more preferable. Use of Si or SiO as a negative electrode active material is preferable because the equilibrium potential of the negative electrode is lowered and the battery's energy density is improved to increase operating voltage.

In the negative electrode layer, the silicon-based material is comprised at a percentage of, preferably 15% to 90% by weight, more preferably 20% to 85% by weight, and particularly preferably 25% to 80% by weight, with respect to the total weight of the boron cluster-type solid electrolyte and the silicon-based material.

The configuration and production method of the negative electrode layer are not particularly limited, and can follow a configuration and a production method known in the present technical field. For example, a negative electrode sheet can be used. The negative electrode sheet has a structure, in which, for example, a layer containing a negative electrode active material is laminated on a current collector. The layer containing a negative electrode active material has voids, and thus, it is possible to impregnate the layer with a solid electrolyte solution (which is also referred to as an "electrolyte solution" in the present description). As a current collector for negative electrode layers, stainless steel foil, copper foil, nickel, etc. can be used. It is to be noted that a current collector whose surface is coated with carbon can also be used.

As a method for producing a negative electrode sheet, a known method can be used. For example, a coating solution is prepared by mixing a negative electrode active material, a solvent, and other materials (a binder, a conductive additive, etc.) described below. This coating solution is applied onto a current collector by a doctor blade method, a spin coating method, a spray coating method, etc., and is then dried to form a layer containing the negative electrode active material on the current collector. Alternatively, a layer containing a negative electrode active material can be formed on a current collector by a vapor-phase method (e.g., vapor deposition). Then, this layer is further impregnated with a solid electrolyte solution and is then dried, so that a negative electrode sheet, on which a solid electrolyte is supported, can be produced.

Therefore, according to one embodiment of the present invention, provided is a method for producing a negative electrode layer for all-solid-state batteries, which comprises preparing a solid electrolyte solution in which a boron cluster-type solid electrolyte is dissolved in a solvent, impregnating a sheet containing a silicon-based material with the obtained solid electrolyte solution, followed by drying, to obtain a negative electrode layer for all-solid-state batteries.

The solid electrolyte solution is obtained by mixing a boron cluster-type solid electrolyte with a solvent. The solvent that can be used herein is not particularly limited, as long as it can dissolve the boron cluster-type solid electrolyte. It is preferably a solvent that does not react with the boron cluster-type solid electrolyte. Examples of such a solvent may include water, alcoholic solvents, tetrahydrofuran, acetonitrile, toluene, N-methyl pyrrolidone, dimethyl carbonate, and ethyl acetate. Among these solvents, one type of solvent may be used, or multiple types of solvents may be used. The solvent is preferably water, methanol, tetrahydrofuran, or acetonitrile, and is more preferably methanol. Water and alcoholic solvents are preferable as solvents because these solvents are compatible with boron cluster-type compounds and have high solubility.

The method for preparing a solid electrolyte solution is not particularly limited, as long as the solid electrolyte solution can be obtained. For example, when a solid electrolyte composite of LiCB₉H₁₀ and LiCB₁₁H₁₂ is used, an aqueous solution of LiCB₉H₁₀ and an aqueous solution of LiCB₁₁H₁₂ are mixed to each other, and the mixed solution is then dried to obtain a solid electrolyte composite powder, which is then dissolved in methanol, so that a solid electrolyte solution can be prepared. Alternatively, a methanol solution of LiCB₉H₁₀ and a methanol solution of LiCB₁₁H₁₂ are mixed to each other, so that a solid electrolyte solution can be prepared. In the case of using other solid electrolytes as well, a solid electrolyte solution can be prepared in a similar manner. It is to be noted that the specific solvents described herein are merely examples, and that other solvents may also be used.

The solid concentration in the solid electrolyte solution (i.e., the concentration of solid electrolyte) is preferably in the range of 5% to 70% by weight, although the optimal value varies depending on the types of the boron cluster-type solid electrolyte and the solvent, to ensure an optimal viscosity during application. By setting the solid electrolyte concentration within the aforementioned concentration range, the solid electrolyte solution can penetrate deep into the pores of the negative electrode sheet, and the precipitation efficiency of the solid electrolyte is also improved. The solid concentration in the solid electrolyte solution is more preferably in the range of 20% to 60% by weight, and is further preferably in the range of 30% to 50% by weight.

As methods of impregnating an electrode sheet with the solid electrolyte solution, known impregnation methods can be used. Among such methods, vacuum impregnation is preferable to penetrate deep into the pores of the electrode layer. Moreover, since heating reduces the viscosity of the solution, the solid electrolyte solution can be penetrated deep into the pores of the negative electrode sheet by heating.

After the negative electrode sheet has been impregnated with the solid electrolyte solution, the sheet is dried to remove the solvent, so that the solid electrolyte precipitates in the voids of the negative electrode sheet, and a negative electrode sheet, on which the solid electrolyte is supported, can be obtained. Drying is particularly limited, as long as it is carried out under conditions in which the solvent can be removed to a desired extent. For example, drying is preferably carried out under atmospheric pressure at a temperature of 40°C to 180°C (more preferably, 45°C to 175°C) for 30 to 5 hours (more preferably, 1 to 4 hours), and further, under vacuum at a temperature of 100°C to 300°C (more preferably, 105°C to 295°C) for 1 to 25 hours (more preferably, 2 to 24 hours). Under these drying conditions, the solvent can be efficiently volatilized, and the solid electrolyte can be precipitated. The conditions as described above are less likely to cause such problems that generation of side reactions or the foaming of the solvent prevents the solid electrolyte from being densely precipitated. Furthermore, solvent volatilization can also be accelerated by performing heating under an inert gas flow or under vacuum.

The negative electrode sheet, which is dried and on which the solid electrolyte is supported, can be rolled to further densify the electrode layer. The rolling method is not particularly limited, and it is preferable to use a roll pressing method that is used to produce an electrode sheet for lithium-ion batteries. While the roll pressing method is advantageous in terms of high continuous productivity, the pressing pressure is lower than those of a uniaxial pressing method and an isostatic pressing method. **In** this case, the pressing pressure is preferably 0.1 MPa to 100 MPa, and more preferably 1 MPa to 80 MPa. When the powder itself has been molded, an extremely high pressing pressure has been required. However, since a solid electrolyte is densely formed in the voids of the electrode layer by adopting a method of allowing the solid electrolyte to precipitate from the solid electrolyte solution, for example, a high pressing pressure, such as 300 MPa, which would deform the particles, is not necessary. Such rolling after drying is intended to fill small cracks caused by expansion and contraction due to thermal change and small voids that generate when the solvent volatilizes, and sufficient effects can be obtained by the roll pressing method.

The negative electrode layer may comprise materials that are commonly used in the relevant technical field, other than the aforementioned silicon-based material and boron cluster-type solid electrolyte. Such materials include binders and conductive additives. The binders used in the negative electrode layer are not particularly limited, and examples thereof may include polyimide compounds, polysiloxane, polyalkylene glycol, polyvinylidene fluoride (PVdF), polytetrafluoroethylene (PTFE), styrenebutadiene rubber (SBR), and acrylic compounds. Thickeners such as carboxymethyl cellulose (CMC) can also be used, as necessary. The conductive additives are not particularly limited, as long as they have the desired conductivity. Examples of the conductive additives may include conductive additives made from carbon materials. Specific examples may include carbon black, acetylene black, ketjen black, and carbon fiber. Other than these, cellulose nanofibers made from plants as raw materials may also be used. These materials can be added at any timing depending on the configuration of the negative electrode layer. For example, if the negative electrode layer is a negative electrode sheet as described above, a coating solution can be prepared by mixing a negative electrode active material, a solvent and the aforementioned other materials (binder, conductive additives, etc.), and the prepared coating solution is then coated onto a current collector. Alternatively, if permitted, other materials as mentioned above may be mixed into the solid electrolyte solution.

### 2. Positive electrode layer

As a positive electrode layer, a positive electrode layer for lithium-ion batteries using a solid electrolyte, which is known in the present technical field, can be used As described above for the negative electrode layer, the positive electrode layer may also be in the form of an electrode sheet (i.e., a positive electrode sheet) having a configuration in which a layer containing a positive electrode active material is laminated on a current collector. Otherwise, a pressed powder compact of the positive electrode composite, or a metal foil or an alloy foil, may also be used. In the case of a positive electrode sheet, as a current collector, a stainless steel foil or an aluminum foil can be used, and the surface of the current collector may be carbon-coated. The method for producing the positive electrode sheet is the same as that for the negative electrode sheet described above.

As a positive electrode active material contained in the positive electrode layer, any substance can be used without any particular limitation, as long as it is a substance that can release lithium ions during charging and can absorb lithium ions during discharging. Examples of the positive electrode active material may include metal oxides having transition metals, sulfur-based positive electrode active materials, organic positive electrode active materials, and FeF₃ and VF₃ that utilize conversion reactions. In the present invention, if the potential of the positive electrode active material is 3.0 V or less in terms of lithium, it is preferable in that the reaction at the interface between the active material and the solid electrolyte is suppressed, and in that the interfacial resistance is reduced. More preferably, the potential of the positive electrode active material is 1.0 to 2.7 V in terms of lithium.

As metal oxides having transition metals, particles or thin films of metal oxides, comprising lithium and any one or more of the transition metals Mn, Co, Ni, Fe, Cr, and V, can be used. Specific examples of such metal oxides having transition metals may include, but are not particularly limited to, LiCoO₂, LiCo₂O₄, LiMnO₂, LiMn₂O₄, LiMnCoO₄, Li₂MnCoO₄, LiNi_{0.8}Co_{0.15}Al_{0.05}O₂, LiNi_{0.5}Mn_{0.5}O₂, Li₂NiMn₃O₈, LiVO₂, LiV₃O₃, LiCrO₂, LiFePO₄, LiCoPO₄, LiMnPO₄, LiVOPO₄, LiNiO₂, LiNi₂O₄, LiNi_{1/3}Co_{1/3}Mn_{1/3}O₂, Li₂FeSiO₄, Li₂MnSiO₄, and LiFeBO₃. In addition, Fe₂O₃, Cr₃O₈, V₂O₅, MnO₂, etc. can also be used. Among others, LiCoO₂, LiMnO₂, LiMn₂O₄, LiNi_{0.8}Co_{0.15}Al_{0.05}O₂, LiNi_{0.5}Mn_{0.5}O₂, Li₂NiMn₃O₈, LiFePO₄, LiCoPO₄, LiMnPO₄, LiVOPO₄, LiNiO₂, and LiNi_{1/3}Co_{1/3}Mn_{1/3}O₂ are preferable.

It is to be noted that, for the purpose of suppressing the reaction of such a positive electrode active material with the solid electrolyte, it is also possible to establish a coating layer to the particles or thin films of the positive electrode active material. Examples of the type of the coating layer may include LiNbO₃, Li₄Ti₅O₁₂, LiTaO₃, LiNbO₃, LiAlO₂, Li₂ZrO₃, Li₂WO₄, Li₂TiO₃, Li₂B₄O₇, Li₃PO₄, Li₂MoO₄, and LiBO₂.

Specific examples of the sulfur-based positive electrode active materials may include, but are not particularly limited to, S, sulfur-carbon composite, TiS₂, TiS₃, TiS₄, NiS, NiS₂, CuS, FeS₂, Li₂S, MoS₃, sulfur-modified polyacrylonitrile, rubeanic acid (dithiooxamide), and disulfide compounds. Among these, TiS₂, TiS₃, TiS₄, NiS, NiS₂, FeS₂, Li₂S, MoS₃, sulfur-modified polyacrylonitrile, sulfur-carbon composite, and rubeanic acid (dithiooxamide) are preferable.

Specific examples of the organic positive electrode active materials may include, but are not particularly limited to, radical compounds including, as typical examples, 2,2,6,6-tetramethylpiperidinoxyl-4-yl methacrylate and polytetramethylpiperidinoxyvinyl ether, quinone compounds, radialene compounds, tetracyaquinodimethane, and phenazine oxide. Among these, radical compounds and quinone compounds are preferable because they have a large theoretical capacity and can maintain a discharge capacity relatively favorably.

The binder used in the positive electrode layer is not particularly limited, and examples of the binder that can be used herein may include polyimides, acrylics, polysiloxanes, polyalkylene glycols, polyvinylidene fluoride (PVdF), polytetrafluoroethylene (PTFE), and ethylene-vinyl alcohol copolymers (EVOH). If necessary, thickeners such as carboxymethyl cellulose (CMC) can also be used. As a conductive additive used herein, the same conductive additive as that used in the negative electrode layer can be used. The positive electrode layer may comprise a solid electrolyte, which may be either a boron cluster-type solid electrolyte, as in the case of the negative electrode layer, or another solid electrolyte commonly used in all-solid-state batteries.

In a case where neither the positive electrode layer nor the negative electrode layer contains Li as an active material, for example, in a case where a sulfur-based positive electrode active material, etc. is used in the positive electrode layer, it is necessary to dope one of the active materials with lithium.

### 3. Solid electrolyte layer

The solid electrolyte layer is located between the positive electrode layer and the negative electrode layer. The configuration and production method of the solid electrolyte layer are not limited, as long as it comprises a solid electrolyte. For example, a solid electrolyte layer alone is produced, and the solid electrolyte is inserted between the positive electrode layer and the negative electrode layer and is then rolled to form an all-solid-state battery. The method for producing a solid electrolyte layer is, for example, subjecting a solid electrolyte powder to compression molding to produce a pellet-shaped solid electrolyte layer. While the solid electrolyte commonly used in the present technical field can be used as a solid electrolyte herein, it is preferable to use the boron cluster-type solid electrolyte that is described above regarding negative electrode layers. Therefore, according to one embodiment of the present invention, the solid electrolyte layer comprises a boron cluster-type solid electrolyte.

Alternatively, it is also possible to produce a solid electrolyte sheet by impregnating a supporting base material, into which a solution is permeable, with a solid electrolyte solution, and then to remove the solvent to precipitate the solid electrolyte. According to one embodiment, the solid electrolyte layer is a solid electrolyte sheet comprising a supporting base material and a boron cluster-type solid electrolyte supported on the supporting base material. Since the solid electrolyte layer also plays a role as a separator separating the positive electrode layer from the negative electrode layer, the supporting base material for the solid electrolyte sheet is required to have high insulation properties. Examples of such a supporting base material may include a glass fiber filter paper, a polyolefin-based separator, a cellulose-based separator, and a nonwoven fabric separator. Among these, a glass fiber filter paper and a nonwoven fabric separator are preferable because they have a high porosity in the separator and excellent heat resistance. By using a supporting base material having a high porosity, the supporting base materials can be impregnated with a larger amount of solid electrolyte solution, resulting in a larger amount of solid electrolyte precipitated. By using a solid electrolyte layer with a large amount of solid electrolyte supported thereon for an all-solid-state battery, high ionic conductivity can be obtained. Furthermore, since the shutdown mechanism caused by heating, which is observed in some separators, does not occur, the space for solid electrolyte precipitation is not lost due to the shutdown mechanism. The thickness of the supporting base material is preferably 10 µm to 300 µm, and more preferably 50 µm to 200 µm.

As a solid electrolyte solution used herein, the same solid electrolyte solution as that impregnated into the aforementioned negative electrode sheet can be used, and the method for preparing the solid electrolyte solution is also the same.

After the solid electrolyte solution has been applied to the supporting base material, it is dried to remove the solvent and to precipitate the solid electrolyte, and the voids of the supporting base material are densely filled with the solid electrolyte.

Drying can be carried out applying the same method, conditions, and the like as those for the drying step used in the aforementioned impregnation of the negative electrode layer with the solid electrolyte solution.

After precipitating the solid electrolyte by drying, it is desirable to densify the solid electrolyte layer by rolling. As mentioned above, while the method of rolling using a roll press (roll pressing method) is advantageous in terms of high continuous productivity, the pressing pressure is lower than those of a uniaxial pressing method and an isostatic pressing method. However, because the solid electrolyte precipitated from the solid electrolyte solution is relatively dense, and also because the boron cluster-type solid electrolyte is soft, the solid electrolyte layer can be sufficiently densified even by rolling at a low pressing pressure. Thus, using a solid electrolyte sheet obtained by impregnating a supporting base material with the solid electrolyte solution as the solid electrolyte layer provides excellent processability. Furthermore, the above-mentioned solid electrolyte sheet also has the advantage of a low risk of short circuits.

Alternatively, a solid electrolyte layer can also be formed by, for example, applying the solid electrolyte solution onto the surface of the electrode layer (the negative electrode layer or the positive electrode layer), then removing the solvent to precipitate the solid electrolyte. The aforementioned solid electrolyte solution used for the negative electrode layer can be used as a solid electrolyte solution herein.

The solid electrolyte solution can be applied by known methods, and for example, a doctor blade method, a spin coating method, a spray coating method, etc. can be applied. The solvent can be removed by the same method as the drying step performed after the negative electrode sheet has been impregnated with the aforementioned solid electrolyte solution. Alternatively, the solid electrolyte solution is applied onto the surface of the electrode layer when the electrode sheet is impregnated with the solid electrolyte solution, so that impregnation of the electrode sheet with the solid electrolyte solution and formation of the solid electrolyte layer can be simultaneously carried out.

The thickness of the solid electrolyte layer is preferably 1 to 300 µm, and more preferably 5 to 100 µm. By setting the thickness of the solid electrolyte layer within such a range, the occurrence of short circuits due to a too thin solid electrolyte layer and an increase in resistance due to a too thick solid electrolyte layer hardly occur.

### 4. All-solid-state battery

An all-solid-state battery is produced by preparing and laminating individual layers described above. However, the production method and lamination method for individual layers are not particularly limited. For example, there are applied: a method comprising dispersing a solid electrolyte or an electrode active material in a solvent to form a slurry, applying the slurry according to doctor blade, spin coating, etc., and then rolling the slurry to form a film; a gas phase method of performing film formation and lamination using a vacuum deposition method, an ion plating method, a sputtering method, a laser ablation method, etc.; and a pressing method comprising molding powders by hot pressing, or cold pressing without applying heat, and then laminating them.

As mentioned above, it is more preferable to form the negative electrode layer as a sheet and to form the solid electrolyte layer as pellets or a solid electrolyte sheet. These are stacked with the positive electrode layer and are then rolled, so that an all-solid-state battery can be produced. The pressing pressure at that time is preferably 0.0001 MPa to 100 MPa, more preferably 0.0005 MPa to 20 MPa, and particularly preferably 0.001 MPa to 10 MPa.

Since the boron cluster-type solid electrolyte also has an ability as a binder, it has a high effect of adhering these sheets to each other. The rolling method can be, for example, a roll pressing method.

Several embodiments of the present invention have been described. These embodiments are presented as examples and are not intended to limit the scope of the invention. These novel embodiments can be carried out in various other forms, and various omissions, replacements, and modifications can be made in a range that does not depart from the gist of the invention. These embodiments and variations thereof are included in the scope and gist of the invention, and are also included in the inventions recited in the claims and its equivalents thereof.

### Examples

Hereinafter, the present invention will be described in more detail in the following examples. However, these examples are not intended to limit the content of the present invention.

### < Example 1: All-solid-state battery comprising SiO+LCBH/LCBH pellets/Li >

### (1) Preparation of boron cluster-type solid electrolyte

A LiCB₉H₁₀ aqueous solution and a LiCB₁₁H₁₂ aqueous solution were each prepared, and the two aqueous solutions were then mixed with each other to a molar ratio of LiCB₉H₁₀ : LiCB₁₁H₁₂ = 7 : 3. Thereafter, water was distilled away from the mixed aqueous solution, using an evaporator, to obtain a boron cluster-type solid electrolyte. Hereinafter, the boron cluster-type solid electrolyte mixed at a molar ratio of LiCB₉H₁₀ : LiCB₁₁H₁₂ = 7 : 3 is also referred to as "LCBH."

### (2) Preparation of solid electrolyte solution

Methanol was added to the LCBH prepared in (1) above to a solid concentration of 40% by weight, and a methanol solution of LCBH was then prepared by manual stirring. This step as a whole was carried out in a dry environment with a dew point of -60°C or lower.

### (3) Preparation of negative electrode slurry

SiO (carbon-coated powder with an average particle size of 6 µm) was used as a negative electrode active material, a polyimide-based binder (U-Varnish A, manufactured by UBE) was used as a binding agent, and acetylene black (DENKA BLACK Li-100, manufactured by Denka Co., Ltd.) was used as a conductive additive. Each material was weighed to a composition of SiO : acetylene black : polyimide binder = 80 : 5 : 15 (% by weight). These materials were added into a planetary centrifugal mixer (ARE-310, manufactured by THINKY CORPORATION) together with an N-methyl-2-pyrrolidone (NMP) solvent, and was then kneaded at 2000 rpm for 20 minutes to obtain a negative electrode slurry.

### (4) Application of negative electrode slurry (production of negative electrode sheet)

The negative electrode slurry obtained in (3) above was applied to the stainless steel foil (thickness: 10 µm) of a current collector, using a tabletop coater (FILMCOATER, PI-1210, manufactured by TESTER SANGYO CO., LTD.), and was then pre-dried (80°C, 10 minutes) in a constant-temperature drying oven. Furthermore, the pre-dried negative electrode sheet was subjected to a vacuum heating treatment (vacuum, 240°C, 15 hours) in a constant-temperature vacuum drying oven. It is to be noted that the capacity density of the electrode was 1.0 mAh/cm², and that the weight per unit area was 8.58 mg/cm². The weight per unit area of SiO contained in this negative electrode sheet was calculated to be 0.71 mg/cm².

### (5) Supporting of solid electrolyte on negative electrode sheet

The solid electrolyte solution obtained in (2) above was added dropwise onto the surface of the negative electrode sheet obtained in (4) above, and the solid electrolyte solution was allowed to permeate into the inside of the negative electrode sheet by wire coating, and was then homogenized, while simultaneously removing excess solid electrolyte solution. Thereafter, the sheet was pre-dried (under atmospheric pressure at 160°C for 2 hours) in a constant-temperature drying oven. These operations from dropwise addition of the solid electrolyte solution to the pre-drying were repeated twice. Thereafter, the sheet was further subjected to vacuum heating drying (vacuum, 180°C, 15 hours) in a constant-temperature vacuum drying oven to obtain a negative electrode sheet with the solid electrolyte supported inside of it. Through this step, the weight per unit area of the negative electrode sheet became 10.67 mg/cm², and the weight of the LCBH formed inside was calculated to be 2.09 mg/cm². This step as a whole was carried out in a dry environment with a dew point of -60°C or lower.

### (6) Production of Solid Electrolyte Layer

The LCBH powder prepared in (1) above was placed in a powder molding machine with a diameter of 12 mm, and was cold press molded into a disk at a pressure of 35 MPa. The resulting disk-shaped pellets as molded products were removed to obtain a solid electrolyte layer. At this time, attention was paid to prevent the pellets from disintegration or breaking. This step as a whole was carried out in a dry environment with a dew point of -60°C or lower.

### (7) Production of all-solid-state battery

The negative electrode sheet supported with the solid electrolyte obtained in (5) above was punched into a disk with a diameter of 11 mm, using an electrode-punching hand punch (manufactured by Nogami Giken Co., Ltd.), which was then used as a test electrode. This 11 mm diameter test electrode and the 12 mm diameter LCBH pellets obtained in (6) above were stacked with each other, and were then placed in a 12 mm diameter powder molding machine, followed by performing cold press molding into a disk shape at a pressure of 35 MPa. Subsequently, an 11 mm diameter Li foil (manufactured by Honjo Metal Co., Ltd.; thickness: 200 µm) was adhered to the side of the LCBH pellets opposite to the test electrode by cold pressing at a pressure of 5 MPa, and was tightly attached. A CR2032-type coin cell was produced to the resulting laminate, so as to produce an all-solid-state battery. This step as a whole was carried out in a dry environment with a dew point of -60°C or lower.

### (8) Charge-discharge test

The all-solid-state battery obtained in (7) above was placed in a constant-temperature chamber set to 60°C, and a constant-current charge-discharge test was performed with a charge/discharge current of 0.05 mA/cm² and an operating voltage range of 1.20 to 0.01 V. The results (charge/discharge curve) are shown in Figure 2. It is found from Figure 2 that the all-solid-state battery according to the embodiment operated stably, with no significant decrease in charge/discharge capacity, even after the cycles had been repeated.

### < Comparative Example 1: All-solid-state battery comprising SiO+3LiBH₄-LiI/LCBH pellets/Li >

The same operations as those in Example 1 were carried out, with the exception that 3LiBH₄-LiI was used as a solid electrolyte to be supported on the negative electrode sheet.

As a solid electrolyte solution used in the step of supporting the solid electrolyte on the negative electrode sheet, a solution prepared by dissolving 3LiBH4-LiI in THF and setting the 3LiBH₄-LiI concentration at 25% by weight was used. The present solid electrolyte solution was added dropwise onto the surface of the negative electrode sheet obtained in (4) of Example 1, and the solution was allowed to permeate into the inside of the negative electrode sheet by wire coating, and was then homogenized, while simultaneously removing excess solid electrolyte solution. Thereafter, the sheet was pre-dried (under atmospheric pressure at 60°C for 2 hours) in a constant-temperature drying oven. These operations from dropwise addition of the solid electrolyte solution to the pre-drying were repeated three time. Thereafter, the sheet was further subjected to vacuum heating drying (vacuum, 120°C, 15 hours) in a constant-temperature vacuum drying oven to obtain a negative electrode sheet with the solid electrolyte supported inside of it. This step as a whole was carried out in a dry environment with a dew point of -60°C or lower.

Other steps were carried out in the same manner as that of Example 1 to produce an all-solid-state battery.

The resulting all-solid-state battery was subjected to a charge-discharge test under the same conditions as those in Example 1. The results are shown in Figure 3. It is found from Figure 3 that the all-solid-state battery of Comparative Example 1 hardly operated.

### < Comparative Example 2: All-solid-state battery comprising SiO+3LiBH4-LiI/3LiBH4-LiI pellets/Li >

The same operations as those in Comparative Example 1 were carried out, with the exception that 3LiBH₄-LiI was used as a material for the solid electrolyte layer. More specifically, Comparative Example 2 was the same as Comparative Example 1, with the exception that 3LiBH₄-LiI powder was used instead of LCBH powder in the step of producing the solid electrolyte layer.

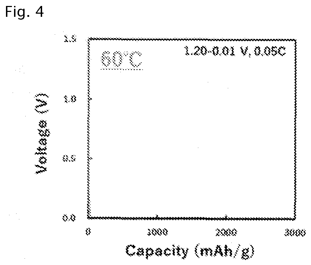

The resulting all-solid-state battery was subjected to a charge-discharge test under the same conditions as those in Example 1 and Comparative Example 1. The results are shown in Figure 4. It is found from Figure 4 that the all-solid-state battery of Comparative Example 2 hardly operated.

### Reference Signs List

1...Positive electrode layer, 2... Solid electrolyte layer, 3... Negative electrode layer, 10...All-solid-state battery.

## Claims

1. A negative electrode layer for all-solid-state batteries, comprising a negative electrode active material and a solid electrolyte, wherein the negative electrode active material is a silicon-based material, and the solid electrolyte is a boron cluster-type solid electrolyte.

2. The negative electrode layer for all-solid-state batteries according to claim 1, wherein the boron cluster-type solid electrolyte is a solid electrolyte composite comprising LiCB₉H₁₀ and LiCB₁₁H₁₂ at a molar ratio of LiCB₉H₁₀/LiCB₁₁H₁₂ = 1.1 to 20.

3. The negative electrode layer for all-solid-state batteries according to claim 2, wherein the boron cluster-type solid electrolyte is a solid electrolyte composite comprising LiCB₉H₁₀ and LiCB₁₁H₁₂ at a molar ratio of LiCB₉H₁₀ : LiCB₁₁H₁₂ = 7 : 3.

4. The negative electrode layer according to any one of claims 1 to 3, wherein the silicon-based material is selected from the group consisting of SiO, Si, SiN, SiC, and Si carbon composite.

5. The negative electrode layer for all-solid-state batteries according to any one of claims 1 to 4, wherein the silicon-based material is comprised at a percentage of 40% to 90% by weight, with respect to the total weight of the boron cluster-type solid electrolyte and the silicon-based material.

6. A method for producing a negative electrode layer for all-solid-state batteries, comprising:
preparing a solid electrolyte solution, in which a boron cluster-type solid electrolyte is dissolved in a solvent, and
impregnating a sheet containing a silicon-based material with the obtained solid electrolyte solution, followed by drying it, to obtain a negative electrode layer for all-solid-state batteries.

7. The method according to claim 6, wherein the solvent comprises at least one selected from the group consisting of water, alcoholic solvents, tetrahydrofuran, acetonitrile, toluene, N-methyl pyrrolidone, dimethyl carbonate, and ethyl acetate.

8. The method according to claim 6 or 7, wherein the boron cluster-type solid electrolyte is a solid electrolyte composite comprising LiCB₉H₁₀ and LiCB₁₁H₁₂ at a molar ratio of LiCB₉H₁₀/LiCB₁₁H₁₂ = 1.1 to 20.

9. The method according to claim 8, wherein the boron cluster-type solid electrolyte is a solid electrolyte composite comprising LiCB₉H₁₀ and LiCB₁₁H₁₂ at a molar ratio of LiCB₉H₁₀ : LiCB₁₁H₁₂ = 7 : 3.

10. The method according to any one of claims 6 to 9, wherein the silicon-based material is selected from the group consisting of SiO, Si, SiN, SiC, and Si carbon composite.

11. The method according to any one of claims 6 to 10, wherein the drying is carried out under atmospheric pressure at a temperature of 40°C to 180°C for 30 minutes to 5 hours, and is further carried out under vacuum at a temperature of 100°C to 300°C for 1 to 25 hours.

12. An all-solid-state battery, comprising a positive electrode layer, and a negative electrode layer, a solid electrolyte layer disposed between the positive electrode layer and the negative electrode layer, wherein
the negative electrode layer is the negative electrode layer for all-solid-state batteries according to claim 1.

13. The all-solid-state battery according to claim 12, wherein the solid electrolyte layer comprises a boron cluster-type solid electrolyte.

14. The all-solid-state battery according to claim 13, wherein the solid electrolyte layer is a solid electrolyte sheet comprising, a supporting base material, and a boron cluster-type solid electrolyte supported on the supporting base material.
